(19) Europäisches Patentamt / European Patent Office / Office européen des brevets

(11) **EP 2 592 835 A1**

(12) **EUROPEAN PATENT APPLICATION**
published in accordance with Art. 153(4) EPC

(43) Date of publication:
**15.05.2013 Bulletin 2013/20**

(51) Int Cl.:
**H04N 7/32** *(2006.01)*

(21) Application number: **11816373.2**

(22) Date of filing: **05.08.2011**

(86) International application number:
**PCT/JP2011/067963**

(87) International publication number:
**WO 2012/020708 (16.02.2012 Gazette 2012/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2010 JP 2010180814**

(71) Applicant: **Nippon Telegraph And Telephone Corporation**
**Tokyo 100-8116 (JP)**

(72) Inventors:
• **MATSUO Shohei**
  **Musashino-shi**
  **Tokyo 180-8585 (JP)**
• **BANDOH Yukihiro**
  **Musashino-shi**
  **Tokyo 180-8585 (JP)**
• **TAKAMURA Seishi**
  **Musashino-shi**
  **Tokyo 180-8585 (JP)**
• **JOZAWA Hirohisa**
  **Musashino-shi**
  **Tokyo 180-8585 (JP)**

(74) Representative: **Ilgart, Jean-Christophe et al**
**BREVALEX**
**95 rue d'Amsterdam**
**75378 Paris Cedex 8 (FR)**

(54) **VIDEO ENCODING METHOD, VIDEO DECODING METHOD, VIDEO ENCODING DEVICE, VIDEO DECODING DEVICE, AND PROGRAMS FOR SAME**

(57) A video encoding apparatus reduces residual energy of motion-compensated inter-frame prediction and improves the coding efficiency in encoding of an image in which optimal values of interpolation filter coefficients are changed in time and space. In the video encoding apparatus, a region division unit sequentially selects region division schemes one by one from among a plurality of prepared region division schemes, and divides a region of an image to be encoded. An interpolation filter coefficient switching unit switches interpolation filter coefficients of a decimal precision pixel for each divided region, and a predictive encoding unit performs predictive encoding. A region division mode decoding section selects a region division scheme, in which a cost is minimized among rate distortion costs calculated for each region division scheme. Using the selected region division scheme, the predictive encoding unit and a variable length encoding unit encode the image to be encoded. Information indicating the region division scheme is also subject to variable length encoding and is transmitted to a decoder.

FIG. 1

**Description**

TECHNICAL FIELD

The present invention relates to a video encoding method, a video decoding method, a video encoding apparatus, a video decoding apparatus, and a program thereof, which have a function of changing a set of interpolation filter coefficients within a frame.
Priority is claimed on Japanese Patent Application No. 2010-180814, filed August 12, 2010, the content of which is incorporated herein by reference.

BACKGROUND ART

According to video encoding, in inter-frame prediction (motion compensation) encoding in which prediction is performed between different frames, a motion vector is obtained with reference to an already decoded frame such that prediction error energy and the like are minimized. A residual signal generated by the motion vector is orthogonally transformed, is subject to quantization, and is generated as binary data through entropy encoding. In order to improve coding efficiency, it is necessary to obtain a prediction scheme with higher prediction precision, and to reduce prediction error energy.

In relation to a video coding standard scheme, many tools for increasing the precision of inter-frame prediction have been introduced. For example, in H.264/AVC (Advanced Video Coding), when occlusion exists in the next frame, it is possible to reduce prediction error energy when referring to frames temporally separated from each other in a little distance, and thus it is possible to refer to a plurality of frames. This tool is called multiple reference frame prediction. Furthermore, in order to cope with complicated forms of motion, it is possible to finely divide a block size such as 16x8, 8x16, 8x4, 4x8, and 4x4, in addition to 16x16 and 8x8. This tool is called variable block size prediction. Similarly, 1/2 precision pixels are interpolated from integer precision pixels of a reference frame using a 6-tap filter, and 1/4 precision pixels are generated using the pixels through linear interpolation. In this way, prediction for motion with non-integer precision is realized. This tool is called 1/4 pixel precision prediction.

In order to design the next generation video coding standard scheme with the coding efficiency higher than that of H.264/AVC, the international standardization organizations ISO/IEC "MPEG" (International Organization for Standardization/International Electrotechnical Commission "Moving Picture Experts Group") and ITU-T "VCEG" (International Telecommunication Union-Telecommunication Standardization sector "Video Coding Experts Group") have currently collected various proposals from various countries around the world. Among the proposals, there are many proposals associated with inter-frame prediction (motion compensation), and the next generation video coding software (hereinafter referred to as KTA (Key Technical Area) software) created at the initiative of VCEG employs a tool for reducing a bit amount of a motion vector, or a tool for expanding a block size to 16x16 or more.

Particularly, a tool for adaptively changing a set of interpolation filter coefficients of a decimal precision pixel is called an adaptive interpolation filter, has an effect in almost all sequences, and is initially employed in KTA software. In contributions to collection (Call for Proposal) of a new coding test model issued by a group JCT-VC (Joint Collaborative Team on Video Coding) for designing the next generation video coding standard jointly conducted by MPEG and VCEG, this technology is frequently employed. Since contribution to the coding efficiency improvement is high, performance improvement of the adaptive interpolation filter is considered to be a highly anticipated field in the future.

The current situation has been described above. However, as an interpolation filter in video coding, the following filters have been used in the related art.

[Fixed interpolation]

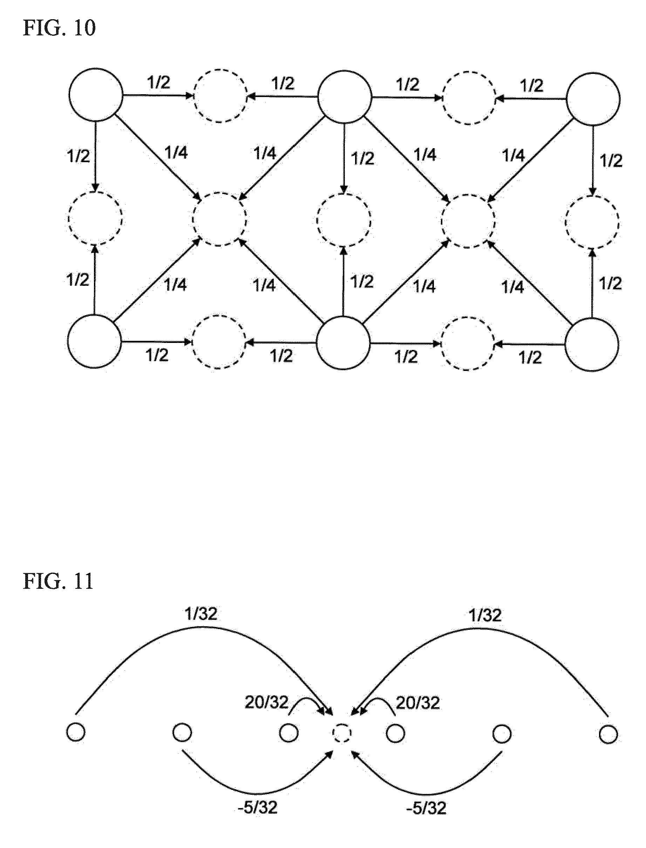

In the past video coding standard scheme MPEG-1/2/4, as illustrated in FIG. 10, in order to interpolate 1/2 precision pixels, interpolated pixels are generated using weighted average from the integer precision pixels (hereinafter, simply referred to as integer pixels) at two points of both sides. That is, the integer pixels of two points are subject to an average value filter of [1/2, 1/2]. Since this is a very simple process, it is effective in terms of the degree of calculation complexity. However, in acquiring 1/4 precision pixels, the performance of the filter is not high.

Meanwhile, in H.264/AVC, when interpolating pixels at 1/2 pixel positions, interpolation is performed using the total six integer pixels at the three right and left points of pixels to be interpolated. For the vertical direction, interpolation is performed using the total six integer pixels at the three upper and lower points. Filter coefficients are [(1, -5, 20, 20, -5, 1)/32]. After the 1/2 precision pixels are interpolated, the 1/4 precision pixels are interpolated using an average value filter of [1/2, 1/2]. Since it is necessary to interpolate all the 1/2 precision pixels once, the degree of calculation complexity is high, but interpolation with high performance is possible and the coding efficiency is improved.

FIG. 11 illustrates an example of an interpolation process of the H.264/AVC. More details are disclosed in Non-Patent Document 1, Non-Patent Document 2, and Non-Patent Document 3.

[Adaptive Interpolation]

In the H.264/AVC, regardless of an input image condition (a sequence type/an image size/a frame rate) or an encoding condition (a block size/a GOP (Group of Pictures) structure/QP (Quantization Parameter), a filter coefficient value is constant. When the filter coefficient value is fixed, for example, a temporally changing effect, such as aliasing, a quantization error, an error due to motion estimation, or a camera noise, is not considered. Accordingly, there is considered to be a limitation in performance improvement in terms of the coding efficiency. Therefore, a scheme of adaptively changing interpolation filter coefficients is proposed in Non-Patent Document 4, and is called a non-separable adaptive interpolation filter.
In Non-Patent Document 4, a two-dimensional interpolation filter (the total 36 filter coefficients of 6x6) is considered, and filter coefficients are determined such that prediction error energy is minimized. In this scheme, it is possible to realize high coding efficiency as compared with the case of using a one-dimensional 6-tap fixed interpolation filter used in the H.264/AVC. However, since the degree of calculation complexity is significantly high in acquiring the filter coefficients, a proposal for reducing the degree of calculation complexity is introduced in Non-Patent Document 5.
A scheme introduced in Non-Patent Document 5 is called a SAIF (Separable Adaptive Interpolation Filter), and uses a one-dimensional 6-tap interpolation filter instead of a two-dimensional interpolation filter.

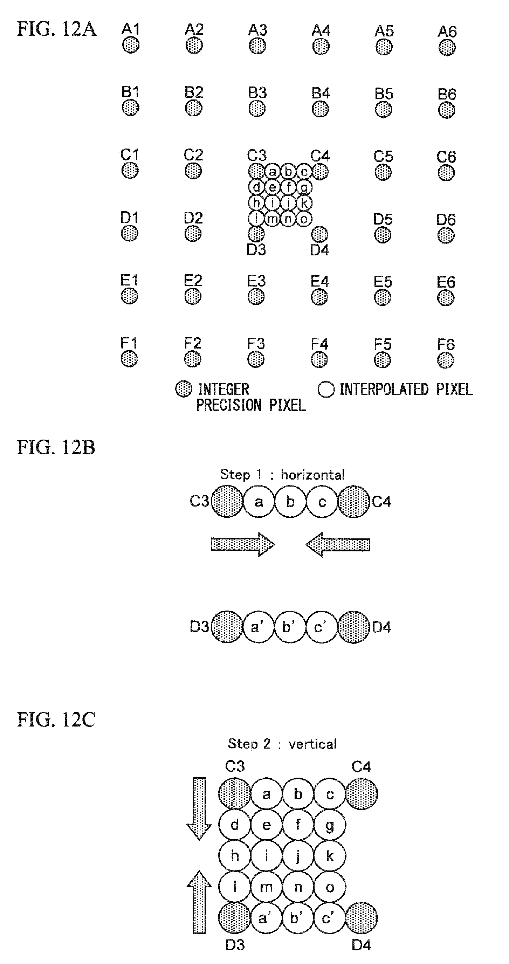

FIG. 12A to FIG. 12C are diagrams illustrating a pixel interpolation method with non-integer precision in the Separable Adaptive Interpolation Filter (SAIF). According to the procedure, horizontal pixels (a, b, c) are first interpolated as indicated in Step 1 of FIG. 12B. In deciding filter coefficients, integer precision pixels C1 to C6 are used. Horizontal filter coefficients for minimizing prediction error energy $E_h{}^2$ of Equation 1 below are analytically decided by a generally known least square method (refer to Non-Patent Document 4).
Equation 1

$$E_h^2 = \sum_{x,y}\left(S_{x,y} - \sum_{c_i} w_{c_i} \cdot P_{\tilde{x}+c_i,\tilde{y}}\right)^2 \qquad (1)$$

In Equation 1 above, S denotes an original image, P denotes a decoded reference image, and x and y denote horizontal and vertical positions of an image. Furthermore, ~x (~ is the symbol above x; the same hereinafter) is expressed by $x+MV_x$-FilterOffset, wherein $MV_x$ denotes a horizontal component of a motion vector acquired in advance, and FilterOffset denotes an offset (a value obtained by dividing a horizontal filter length by 2) for adjustment. For the vertical direction, ~y is expressed by $y+MV_y$, wherein $MV_y$ denotes a vertical component of the motion vector. $w_{ci}$ denotes a horizontal filter coefficient group $c_i$ ($0 \le c_i < 6$) to be calculated.
A linear equation having a number equal to the filter coefficients calculated by Equation 1 above is acquired, so that a minimization process is independently performed for each decimal pixel position in the horizontal direction. Through this minimization process, three types of 6-tap filter coefficient groups are acquired, and decimal precision pixels a, b, and c are interpolated using the filter coefficients.
After the pixel interpolation in the horizontal direction is completed, an interpolation process in the vertical direction is performed as indicated in Step 2 of FIG. 12C. A linear problem the same as in the horizontal direction is solved, so that vertical filter coefficients are decided. In detail, vertical filter coefficients for minimizing prediction error energy $E_v{}^2$ of Equation 2 below are analytically decided.
Equation 2

$$E_v^2 = \sum_{x,y}\left(S_{x,y} - \sum_{c_j} w_{c_j} \cdot \hat{P}_{\tilde{x},\tilde{y}+c_j}\right)^2 \qquad (2)$$

In Equation 2 above, S denotes an original image, ^P (^ is the symbol P with above) denotes an image subject to a horizontal interpolation process after decoding, and x and y denote horizontal and vertical positions of an image. Furthermore, ~x is expressed by $4 \cdot (x+MV_x)$, wherein $MV_x$ denotes a rounded horizontal component of a motion vector. For the vertical direction, ~y is expressed by $y+MV_y$-FilterOffset, wherein $MV_y$ denotes a vertical component of the motion vector and FilterOffset denotes an offset (a value obtained by dividing a filter length by 2) for adjustment. $w_{cj}$ denotes a vertical filter coefficient group $c_j$ (0≤cj<6) to be calculated.

A minimization process is independently performed for each decimal pixel position, so that 12 types of 6-tap filter coefficient groups are acquired. Using the filter coefficients, remaining decimal precision pixels are interpolated.

Thus, the total 90 (=6×15) filter coefficients need to be coded and transmitted to a decoder side. Particularly, for encoding with low resolution, since overhead is large, filter coefficients to be transmitted are reduced using symmetry of a filter. For example, in FIG. 12A to FIG. 12C, positions of b, h, i, j, and k are positioned at the center from each integer precision pixel, and if it is the horizontal direction, coefficients used at the three left points may be inverted to be applied to the three right points. Similarly, if it is the vertical direction, coefficients used at the three upper points may be inverted to be applied to the three lower points (c1=c6, c2=c5, and c3=c4).

In addition, since d and I are symmetrical to each other with respect to h, filter coefficients may also be inverted for use. That is, if six coefficients of d are transmitted, the value may also be applied to I. c(d)1 is set to c(I)6, c(d)2 is set to c(I)5, c(d)3 is set to c(I)4, c(d)4 is set to c(I)3, c(d)5 is set to c(I)2, and c(d)6 is set to c(I)1. This symmetry is also available to e and m, f and n, and g and o. Even for a and c, the same logic is applicable. However, since a result in the horizontal direction has an influence on interpolation in the vertical direction, symmetry is not used and a and c are individually transmitted. As a result of using the symmetry, the number of filter coefficients to be transmitted in each frame is 51 (15 in the horizontal direction and 36 in the vertical direction).

So far, in the adaptive interpolation filter of Non-Patent Document 5, a unit of the minimization process of the prediction error energy is fixed in a frame. For one frame, 51 filter coefficients are decided. When a frame to be encoded is divided in two types (or a plurality of types) of large texture areas, optimal filter coefficients are coefficient groups in which the two textures (all the textures) are considered. In the state in which filter coefficients having characteristics only in the vertical direction are acquired in area A and filter coefficients having characteristics only in the horizontal direction are acquired in area B, filter coefficients are derived by averaging these.

Non-Patent Document 6 proposes a method in which one filter coefficient group (51 filter coefficients) is not limited to one frame, and a plurality of filter coefficient groups are prepared and switched according to local characteristics of an image, so that the prediction error energy is reduced and thus the coding efficiency is improved.

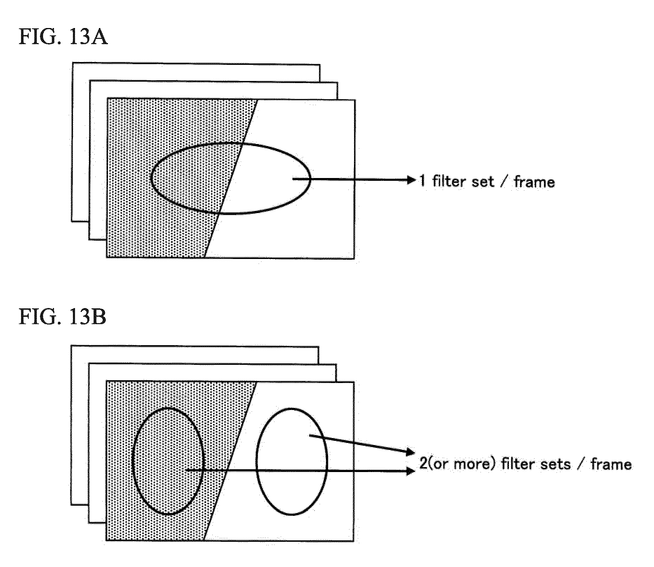

As illustrated in FIG. 13A and FIG. 13B, the case including a texture in which characteristics of frames to be coded are different from each other is assumed. As illustrated in FIG. 13A, when one filter coefficient group is optimized as an entire frame and is sent, all characteristics of each texture are considered. When a texture is rarely changed, filter coefficients by optimization for the whole area are considered to be the best. However, when there are textures having contrast characteristics, it is possible to reduce a bit amount of an entire frame by using filter coefficients optimized in each texture as illustrated in FIG. 13B.

In this regard, in Non-Patent Document 6, a method of using a plurality of filter coefficient groups optimized by region division for one frame is considered. As a region division scheme, Non-Patent Document 6 employs a motion vector (horizontal and vertical components, and directions) or a spatial coordinate (a macro block position, and coordinate x or coordinate y of a block), and region division is performed in consideration of various image characteristics.

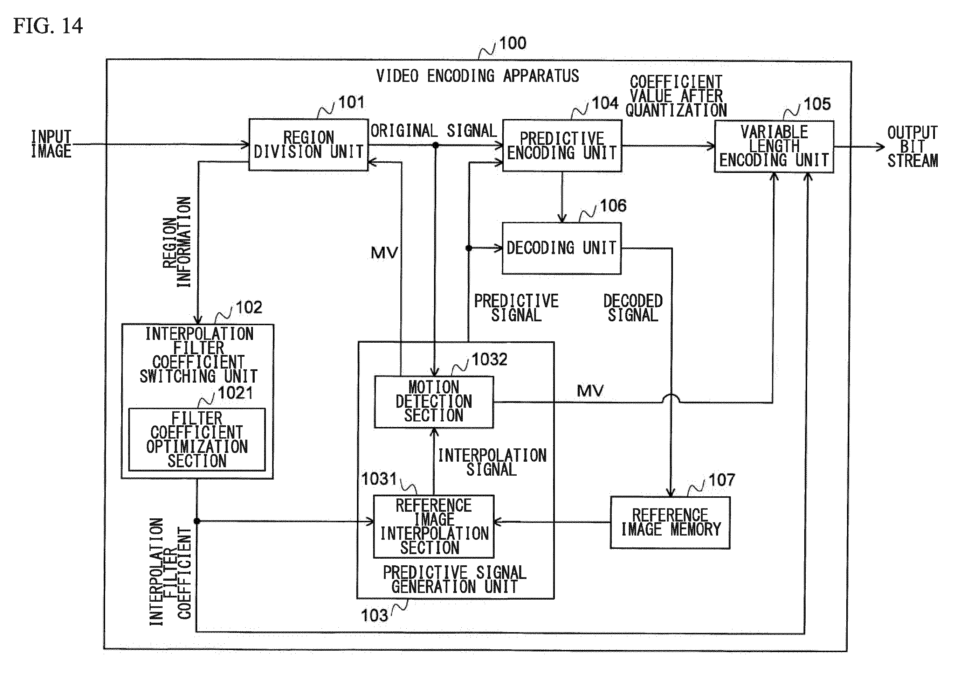

FIG. 14 illustrates a configuration example of a video encoding apparatus using the related region division-type adaptive interpolation filter as disclosed in Non-Patent Document 6.

In a video encoding apparatus 100, a region division unit 101 divides a frame to be encoded of an input video signal into a plurality of regions including a plurality of blocks that are set to units in which interpolation filter coefficients are adaptively switched. An interpolation filter coefficient switching unit 102 switches a set of interpolation filter coefficients of a decimal precision pixel, which is used in a reference image in predictive encoding, for each region divided by the region division unit 101. As a set of interpolation filter coefficients to be switched, for example, a set of filter coefficients optimized by a filter coefficient optimization section 1021 is used. The filter coefficient optimization section 1021 calculates a set of interpolation filter coefficients in which prediction error energy between an original image and an interpolated reference image is minimized.

A predictive signal generation unit 103 includes a reference image interpolation section 1031 and a motion detection section 1032. The reference image interpolation section 1031 applies an interpolation filter based on a set of interpolation filter coefficients, which is selected by the interpolation filter coefficient switching unit 102, to a decoded reference image stored in a reference image memory 107. The motion detection section 1032 performs motion search for an interpolated reference image, thereby calculating a motion vector. The predictive signal generation unit 103 generates a predictive signal through motion compensation based on a decimal precision motion vector calculated by the motion detection section 1032.

A predictive encoding unit 104 performs predictive encoding processes such as calculation of a residual signal between the input video signal and the predictive signal, orthogonal transformation of the residual signal, and quantization of the transformed coefficients. Furthermore, a decoding unit 106 decodes a result of the predictive encoding, and stores a decoded image in the reference image memory 107 for next predictive encoding.

A variable length encoding unit 105 performs variable length encoding for the quantized transform coefficients and the motion vector, performs variable length encoding for the interpolation filter coefficients, which are selected by the interpolation filter coefficient switching unit 102, for each region, and outputs them as an encoded bit stream.

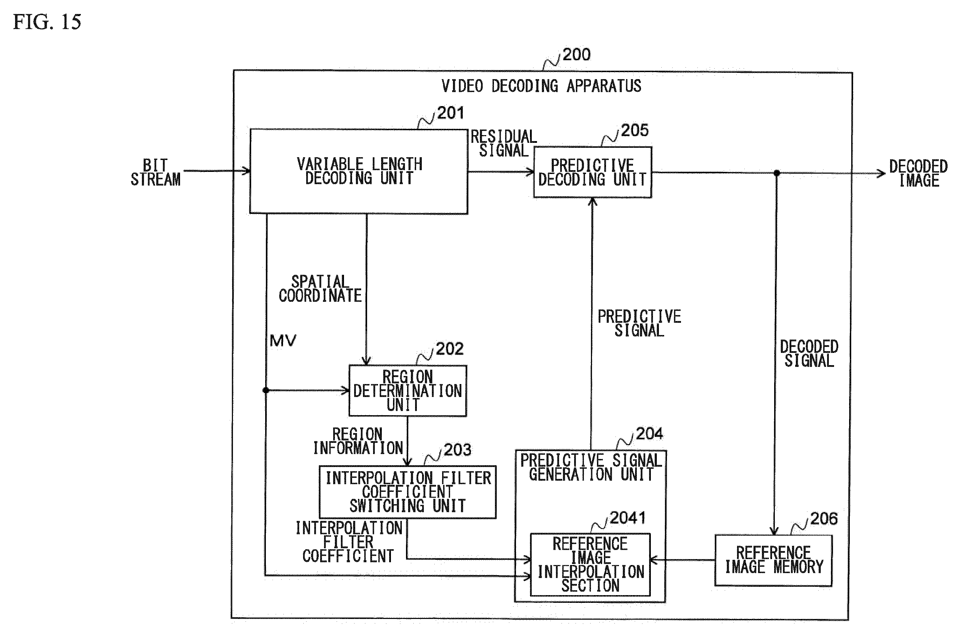

FIG. 15 illustrates a configuration example of a video decoding apparatus using the related region division-type adaptive interpolation filter. The stream encoded by the video encoding apparatus 100 illustrated in FIG. 14 is decoded by a video encoding apparatus 200 illustrated in FIG. 15.

In the video decoding apparatus 200, a variable length decoding unit 201 receives an encoded bit stream, and decodes quantized transform coefficients, a motion vector, an interpolation filter coefficient group and the like. A region determination unit 202 determines regions that are set to units in which an interpolation filter coefficient group is adaptively switched for a frame to be decoded. An interpolation filter coefficient switching unit 203 switches the interpolation filter coefficient group, which is decoded by the variable length decoding unit 201, for each region determined by the region determination unit 202.

A reference image interpolation section 2041 in a predictive signal generation unit 204 applies an interpolation filter based on the interpolation filter coefficients, which are received from the interpolation filter coefficient switching unit 203, to a decoded reference image stored in a reference image memory 206, and restores decimal precision pixels of the reference image. The predictive signal generation unit 204 generates a predictive signal of blocks to be decoded from the reference image for which the restoration of the decimal precision pixels has been performed.

A predictive decoding unit 205 performs inverse quantization, inverse orthogonal transform and the like for the quantized coefficients decoded by the variable length decoding unit 201, generates a decoded signal by adding a predictive residual signal calculated by this process to the predictive signal generated by the predictive signal generation unit 204, and outputs the decoded signal as a decoded image. Furthermore, the decoded image decoded by the predictive decoding unit 205 is stored in the reference image memory 206 for next predictive decoding.

[Related Art Document]

[Non-Patent Document]

[Non-Patent Document 1] Hiroshi Harashima, Yoshinori Sakai, Toshiyuki Yoshida: "Video Information Encoding", Ohmsha, Ltd, pp.135-136, 2001

[Non-Patent Document 2] Sakae Okubo, Shinya Kadono, Yoshihiro Kikuchi, Teruhiko Suzuki: "H.264/AVC Textbook, 3rd Revised Edition", Impress R&D, pp.119-123, 2009

[Non-Patent Document 3] I. E. G. Richardson, G. J. Sullivan: "H.264 and MPEG-4 VIDEO COMPRESSION", WILEY, pp.172-175, 2003

[Non-Patent Document 4] Y. Vatis, B. Edler, D. T. Nguyen , J. Ostermann: "Motion and aliasing-compensated prediction using a two-dimensional non-separable adaptive Wiener interpolation filter ", Proc. ICIP2005, IEEE International Conference on Image Processing, pp.II 894-897, Genova, Italy, Sep. 2005

[Non-Patent Document 5] S. Wittmann, T. Wedi: "Separable adaptive interpolation filter for video coding", Proc. ICIP2008, IEEE International Conference on Image Processing, pp.2500-2503, San Diego, California, USA, Oct. 2008

[Non-Patent Document 6] Shohei Matsuo, Seishi Takamura, and Hirohisa Jozawa: "Separable Adaptive Interpolation Filter with Region Dividing Technique for Motion Compensation", Institute of Electronic, Information and Communication Engineering, Image Engineering, pp.113-116, Nov.2009

SUMMARY OF THE INVENTION

[Problems to be Solved by the Invention]

The region division-type adaptive interpolation filter (Non-Patent Document 6) used by the video encoding apparatus 100 as illustrated in FIG. 14 switches a plurality of filter coefficient groups in a frame in consideration of local characteristics of an image, thereby reducing prediction error energy and thus improving the coding efficiency. However, in this apparatus, a region division scheme used in an initial frame is used for all frames. Since a video could have intra-frame characteristics changed in the time direction (for example, scene change and the like), if it is possible to change a division scheme in units of frames, the coding efficiency is anticipated to be further improved.

In order to solve these problems, it is an object of the present invention to select an optimal region division scheme in units of frames or slices with respect to an image in which optimal values of interpolation filter coefficients are changed in time and space, thereby further reducing residual energy of motion-compensated inter-frame prediction and thus improving the coding efficiency.

[Means for Solving the Problems]

According to a method for achieving the object, a plurality of region division schemes are prepared, a rate distortion cost is calculated for each scheme, a region division scheme, in which the cost is minimized, is selected, and information indicating the region division scheme is transmitted as a flag. The plurality of region division schemes are switched in units of frames, so that prediction error energy is reduced and thus the coding efficiency is improved.

That is, the present invention is a video encoding method using motion compensation in which a plurality of region division schemes for dividing a frame (or a slice) to be encoded are prepared, one region division scheme is sequentially selected from among the plurality of region division schemes, encoding information (information acquired after decoding or during the decoding) is detected from the frame to be encoded, region division is performed in the frame based on the detected encoding information, an interpolation filter of a decimal precision pixel is selected according to a result of the division, encoding is performed by interpolating a decimal precision pixel using the selected interpolation filter, a cost for the selected region division scheme is calculated and stored, the best region division scheme is selected based the stored cost, a region division mode number indicating the region division scheme is encoded, and encoding is performed using the best region division scheme.

Furthermore, the present invention is a video decoding method for decoding an encoded stream encoded using the video encoding method, in which the region division mode number is decoded, the interpolation filter coefficients of a decimal precision pixel are decoded, classification is performed in units of blocks using information acquired from a block to be decoded, region division is performed according to a result of the classification, and decoding is performed by switching the interpolation filter of a decimal precision pixel for each divided region.

The operation of the present invention is as follows. In the related region division-type adaptive interpolation filter, only one type of region division scheme is applied to one type of video and there is a limitation in improving the coding efficiency when there are significant spatiotemporal differences in characteristics of entire video. Meanwhile, in the present invention, a set of interpolation filter coefficients are spatiotemporally optimized, so that flexible treatment to locality of an image is possible and the coding efficiency can be further improved.

[Advantageous Effects of the Invention]

As described above, according to the present invention, it is possible to select an optimal region division scheme in units of one or a plurality of frames or slices and to switch a set of interpolation filter coefficients in consideration of spatiotemporal locality of an image, which is not treated by the related separable adaptive interpolation filter. Consequently, it is possible to improve the coding efficiency through reduction of prediction error energy.

BRIEF DESCRIPTION OF THE DRAWINGS

FIG. 1 is a block diagram illustrating a video encoding apparatus in accordance with an embodiment of the present invention.

FIG. 2 is a flowchart illustrating an operation of a video encoding apparatus in accordance with an embodiment of the present invention.

FIG. 3 is a diagram illustrating an example of a division table for defining a region division mode in a video encoding apparatus in accordance with an embodiment of the present invention.

FIG. 4A is a flowchart illustrating an operation of region division based on components of a motion vector in a video encoding apparatus in accordance with an embodiment of the present invention.

FIG. 4B is a graph illustrating a distribution of components of a motion vector in a video encoding apparatus in accordance with an embodiment of the present invention.

FIG. 5A is a flowchart illustrating a process of region division based on a direction of a motion vector in a video encoding apparatus in accordance with an embodiment of the present invention.

FIG. 5B is a graph illustrating an example of region division based on a direction of a motion vector in a video encoding apparatus in accordance with an embodiment of the present invention.

FIG. 5C is a graph illustrating another example of region division based on a direction of a motion vector in a video encoding apparatus in accordance with an embodiment of the present invention.

FIG. 5D is a graph illustrating still another example of region division based on a direction of a motion vector in a video encoding apparatus in accordance with an embodiment of the present invention.

FIG. 6A is a flowchart illustrating a process of region division based on a spatial coordinate in a video encoding apparatus in accordance with an embodiment of the present invention.

FIG. 6B is a graph illustrating an example of region division based on a spatial coordinate in a video encoding apparatus in accordance with an embodiment of the present invention.

FIG. 6C is a graph illustrating another example of region division based on a spatial coordinate in a video encoding apparatus in accordance with an embodiment of the present invention.

FIG. 7A is a flowchart illustrating a process of region division (when the number of regions is 4) based on a direction of a motion vector in a video encoding apparatus in accordance with an embodiment of the present invention.

FIG. 7B is a graph illustrating an example of region division based on a direction of a motion vector in a video encoding apparatus in accordance with an embodiment of the present invention.

FIG. 7C is a table illustrating definition of a region number in a video encoding apparatus in accordance with an embodiment of the present invention.

FIG. 8 is a block diagram illustrating a video decoding apparatus in accordance with an embodiment of the present invention.

FIG. 9 is a flowchart illustrating an operation of a video decoding process in accordance with an embodiment of the present invention.

FIG. 10 is a diagram illustrating a pixel interpolation method of non-integer precision in a related video encoding standard scheme.

FIG. 11 is a diagram illustrating an example of a pixel interpolation method with non-integer precision in H.264/AVC.

FIG. 12A is a diagram illustrating a pixel interpolation method with non-integer precision in a separable adaptive interpolation filter (SAIF).

FIG. 12B is a diagram illustrating one process of a pixel interpolation method with non-integer precision in a separable adaptive interpolation filter (SAIF).

FIG. 12C is a diagram illustrating another process of a pixel interpolation method with non-integer precision in a separable adaptive interpolation filter (SAIF).

FIG. 13A is a diagram illustrating an example of comparison of a related adaptive interpolation filter and a region division-type adaptive interpolation filter.

FIG. 13B is a diagram illustrating another example of comparison of a related adaptive interpolation filter and a region division-type adaptive interpolation filter.

FIG. 14 is a block diagram illustrating a video encoding apparatus using a related region division-type adaptive interpolation filter.

FIG. 15 is a block diagram illustrating a video decoding apparatus using a related region division-type adaptive interpolation filter.

## MODES FOR CARRYING OUT THE INVENTION

Hereinafter, an embodiment of the present invention will be described with reference to the accompanying drawings. In addition, as an example, a method for dividing a region in units of frames is described. However, the region may be divided in units of slices. Furthermore, region division may be decided in a plurality of frames such as two or three frames.

[Video encoding apparatus]

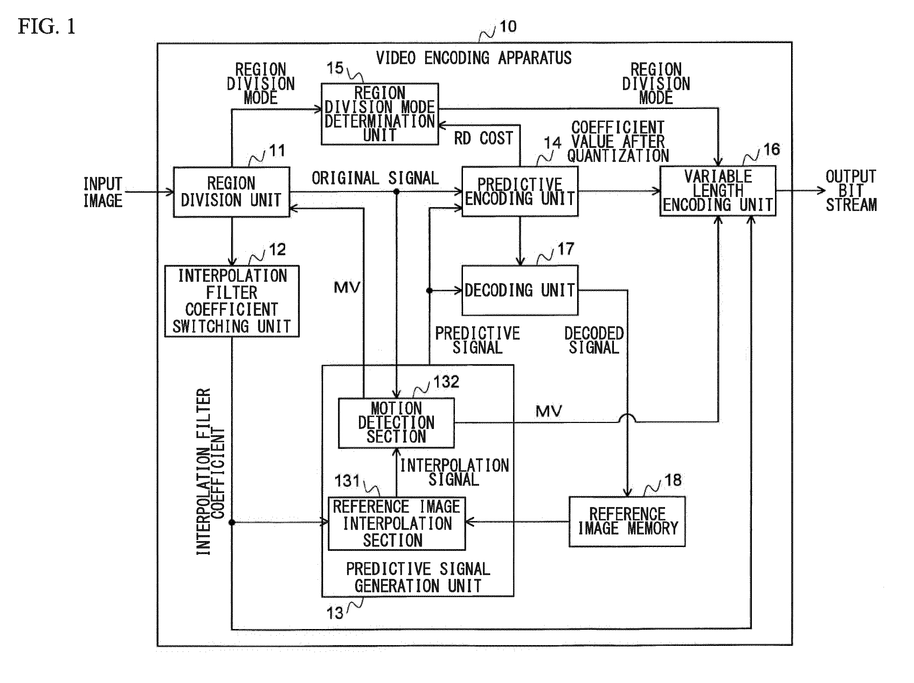

FIG. 1 is a diagram illustrating a configuration example of a video encoding apparatus in accordance with an embodiment of the present invention. A video encoding apparatus 10 divides a region using a plurality of region division schemes (called region division modes), performs interpolation of decimal precision pixels using a region division-type adaptive interpolation filter based on region division in which an encoding cost is minimized among respective region division modes, and performs encoding using decimal precision motion compensation. This video encoding apparatus is different from the related video encoding apparatus 100 illustrated in FIG. 14, in that the video encoding apparatus selects division of a region, which is a unit to switch an adaptive interpolation filter, from among the plurality of region division schemes.

In the video encoding apparatus 10, a region division unit 11 divides a frame to be encoded of an input video signal into a plurality of regions including a plurality of blocks that are set to units in which interpolation filter coefficients are adaptively switched. In the division of the region, a plurality of region division modes are prepared, and respective regions are divided according to one region division mode sequentially selected from the plurality of region division modes.

An interpolation filter coefficient switching unit 12 switches a set of interpolation filter coefficients of a decimal precision pixel, which is used for a reference image in predictive encoding, for each region divided by the region division unit 11. As interpolation filter coefficients to be switched, optimized interpolation filter coefficients, in which prediction error energy of an original image and an interpolated reference image is minimized, is used for each region divided by the region division unit 11.

A predictive signal generation unit 13 includes a reference image interpolation section 131 and a motion detection section 132. The reference image interpolation section 131 applies an interpolation filter based on interpolation filter coefficients, which are selected by the interpolation filter coefficient switching unit 12, to a decoded reference image stored in a reference image memory 18. The motion detection section 132 performs motion search for the interpolated reference image, thereby calculating a motion vector. The predictive signal generation unit 13 generates a predictive signal through motion compensation based on a decimal precision motion vector calculated by the motion detection section 132.

A predictive encoding unit 14 performs predictive encoding processes such as calculation of a residual signal between the input video signal and the predictive signal, orthogonal transformation of the residual signal, and quantization of the transformed coefficients.

A region division mode determination unit 15 stores a rate distortion (RD) cost of a result encoded by the predictive encoding unit 14 for each region division mode selected by the region division unit 11, and selects a region division mode in which the rate distortion cost is minimized.

A variable length encoding unit 16 performs variable length encoding for the region division mode (for example, a mode number) selected by the region division mode determination unit 15. Furthermore, the variable length encoding unit 16 performs variable length encoding for the interpolation filter coefficients selected by the interpolation filter coefficient switching unit 12 for each region. Moreover, the variable length encoding unit 16 performs variable length encoding for quantized transform coefficients, which is output by the predictive encoding unit 14 in a finally selected region division mode, and a motion vector output by the motion detection section 132. The variable length encoding unit 16 outputs information on the encoding as an encoded bit stream.

A decoding unit 17 decodes a result of the predictive encoding by the predictive encoding unit 14, and stores a decoded signal in the reference image memory 18 for next predictive encoding.

[Process flow of video encoding apparatus]

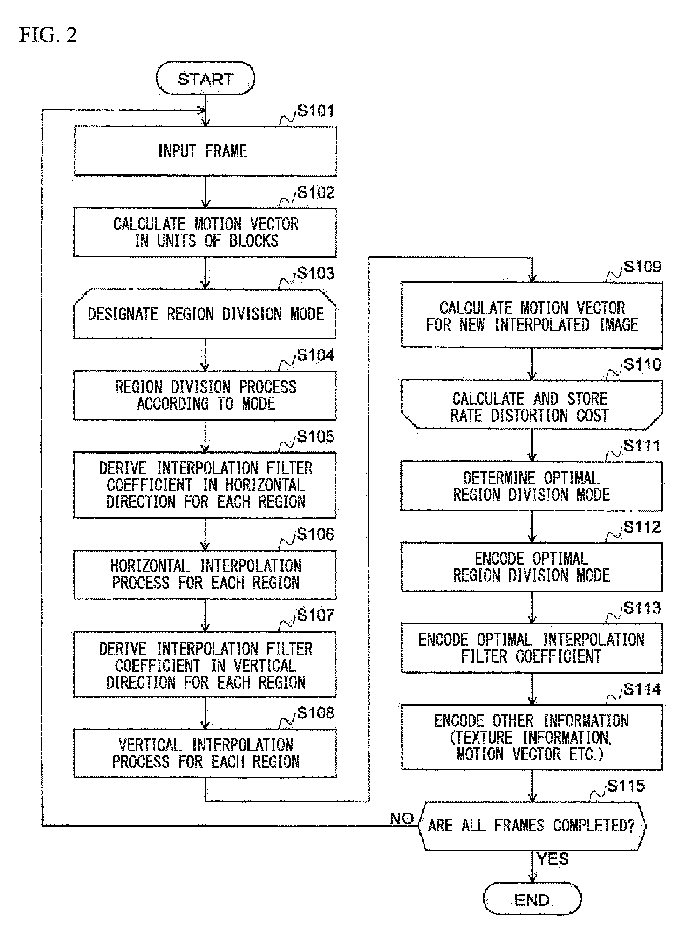

FIG. 2 is a flowchart of a video encoding process performed by the video encoding apparatus 10. Hereinafter, unless specifically mentioned, a process of a luminance signal is assumed for description. However, a function of selecting optimal region division and switching and encoding interpolation filter coefficients in units of regions, which is described in the present example, is applicable to a chrominance signal as well as the luminance signal.

First, in step S101, a frame to be encoded is input. Next, in step S102, the input frame is divided into blocks (for example, a block size of the related motion estimation such as 16x16 or 8x8), and an optimal motion vector is calculated by the motion detection section 132 in units of blocks. In interpolation of decimal precision pixels of a reference image in step S102, the fixed 6-tap filter based on the conventional H.264/AVC is used.

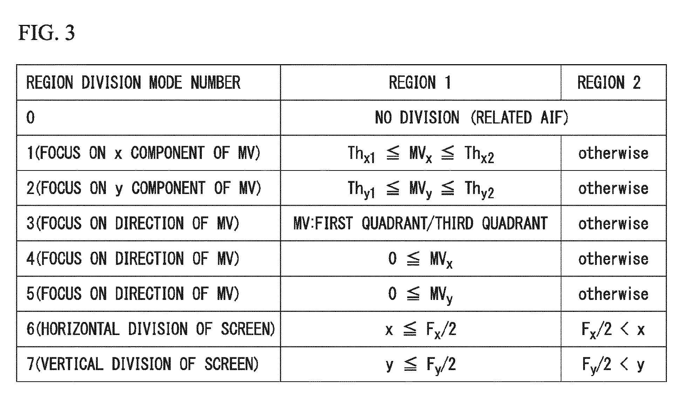

Next, in step S103, the region division unit 11 sequentially selects one region division mode from among a plurality of prepared region division modes, and repeats the process up to step S110 with respect to the selected region division mode. Details of an example of the region division mode will be described later with reference to FIG. 3.

In step S104, the region division unit 11 performs region division according to the region division mode selected in step S103.

In steps S105 to S108, from a result of the region division of step S104, an optimization process is performed for each region. First, in step S105, using Equation 3 below, which is a prediction error energy function, an optimization process of interpolation filter coefficients is performed for each decimal precision pixel in the horizontal direction.

Equation 3

$$E_h(\alpha_{m,n})^2 = \sum_{(x,y) \in \alpha_{m,n}} \left( S_{x,y} - \sum_{c_i} w_{c_i} \cdot P_{\tilde{x}+c_i, \tilde{y}} \right)^2 \qquad (3)$$

In Equation 3 above, $\alpha_{m,n}$ denotes each region, m denotes a region division mode number, n denotes a region number in a specific region division mode, S denotes an original image, P denotes a decoded reference image, and x and y denote horizontal and vertical positions of an image. Furthermore, ~x (~ is the symbol above x) is expressed by x+MV$_x$-FilterOffset, wherein MV$_x$ denotes a horizontal component of a motion vector acquired in advance, and FilterOffset denotes an offset (a value obtained by dividing a horizontal filter length by 2) for adjustment. For the vertical direction, ~y is expressed by y+MV$_y$, wherein MV$_y$ denotes a vertical component of the motion vector. $w_{c_i}$ denotes a horizontal filter coefficient group $c_i$ ($0 \le c_i < 6$) to be calculated.

Next, in step S106, using the horizontal interpolation filter coefficients acquired in step S105, decimal pixel interpolation (interpolation of a, b, and c in FIG. 12) in the horizontal direction is independently performed for each region in the frame.

In step S107, an optimization process of interpolation filter coefficients in the vertical direction is performed. Using Equation 4 below, which is a prediction error energy function in the vertical direction, an optimization process of interpolation filter coefficients is performed for each decimal precision pixel in the vertical direction.

Equation 4

$$E_v(\alpha_{m,n})^2 = \sum_{(x,y) \in \alpha_{m,n}} \left( S_{x,y} - \sum_{c_j} w_{c_j} \cdot \hat{P}_{\tilde{x}, \tilde{y}+c_j} \right)^2 \qquad (4)$$

In Equation 4 above, $\alpha_{m,n}$ denotes each region, m denotes a region division mode number, n denotes a region number in a specific region division mode, S denotes an original image, ^P (^ is the symbol P with above) denotes an image interpolated in the horizontal direction in step S105, and x and y denote horizontal and vertical positions of an image. Furthermore, ~x is expressed by $4 \cdot (x + MV_x)$, wherein $MV_x$ denotes a rounded horizontal component of a motion vector. For the vertical direction, ~y is expressed by $y + MV_y - FilterOffset$, wherein $MV_y$ denotes a vertical component of the motion vector and FilterOffset denotes an offset (a value obtained by dividing a filter length by 2) for adjustment. $w_{c_j}$ denotes a horizontal filter coefficient group $c_j$ ($0 \leq c_j < 6$) to be calculated.

In step S108, using the vertical interpolation filter coefficients acquired in step S107, decimal pixel interpolation (interpolation of d to o in FIG. 12) in the vertical direction is independently performed for each region in the frame.

Next, in step S109, using the vertically interpolated image in step S108 as a reference image, a motion vector is calculated again.

In step S110, a rate distortion cost (an RD cost) for the region division mode selected in step S103 is calculated and stored. The process from step S103 to step S110 is performed for all the prepared region division modes.

Next, in step S111, the region division mode determination unit 15 decides an optimal region division mode in which the rate distortion cost is minimized, among the plurality of the prepared region division modes.

Next, in step S112, the variable length encoding unit 16 encodes the optimal region division mode decided in step S111. Furthermore, in step S113, the variable length encoding unit 16 encodes the interpolation filter coefficients in the region division mode decoded in step S112. Moreover, in step S114, residual information (a motion vector, a DCT coefficient and the like) to be encoded is encoded in the region division mode decided in step S111.

[Region division mode]

Next, an example of the region division mode used in the present embodiment will be described.

FIG. 3 is a diagram illustrating an example of a division table for defining the region division mode. In FIG. 3, $Th_{x1}$, $Th_{x2}$, $Th_{y1}$, and $Th_{y2}$ denote threshold values obtained from a histogram of a motion vector MV, $MV_x$ denotes a horizontal component of the motion vector, $MV_y$ denotes a vertical component of the motion vector, x and y denote spatial coordinates indicating block positions in the frame, $F_x$ denotes a horizontal width of the frame, and $F_y$ denotes a vertical width of the frame.

In the example illustrated in FIG. 3, the maximum number of regions is fixed to 2. However, the number of regions may be set to 3 or more. Here, as the region division mode, eight types of division schemes in which a region division mode number (hereinafter, simply referred to as a mode number) is from 0 to 7 are prepared.

[Mode number is 0]

Mode number 0 indicates the case in which a region in the frame is not divided and the related adaptive interpolation filter (AIF) is used.

[Mode numbers are 1 and 2]

Mode number 1 indicates a mode in which a region is divided while focusing on an x component ($MV_x$) of a motion vector, and the region is divided as a first region (region 1) if $MV_x$ is between the threshold values $Th_{x1}$ and $Th_{x2}$, and is divided as a second region (region 2) if $MV_x$ is outside the range of the threshold values $Th_{x1}$ and $Th_{x2}$.

Mode number 2 indicates a mode in which a region is divided while focusing on a y component ($MV_y$) of the motion vector, and a first region (region 1) is acquired if $MV_y$ is between the threshold values $Th_{y1}$ and $Th_{y2}$, and is divided as a second region (region 2) if $MV_y$ is outside the range of the threshold values $Th_{y1}$ and $Th_{y2}$.

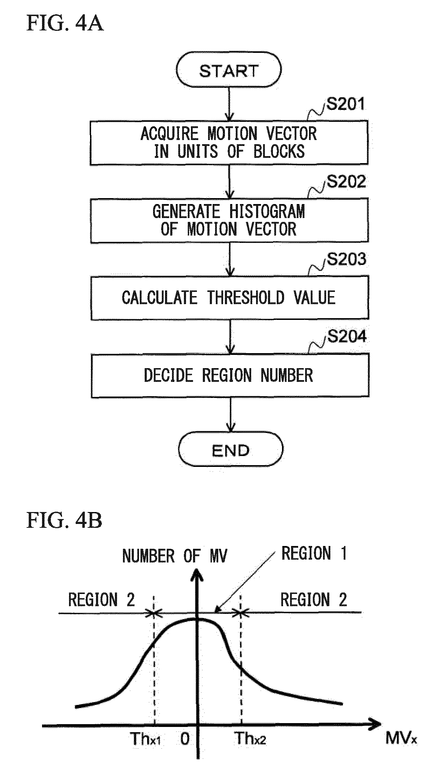

FIG. 4A illustrates a process flow of region division based on the component (mode number 1 to 2) of a motion vector. First, in step S201, a motion vector is acquired for a frame to be encoded in units of blocks. In step S202, a histogram of an x component (when the mode number is 1) or a y component (when the mode number is 2) of the motion vector is generated. In step S203, threshold values are calculated from the histogram. In step S204, a region number (region 1 or region 2) is decided by a comparison between the threshold value calculated in step S203 and the component of the motion vector.

The calculation of the threshold value in step S203 will be described using the case in which the mode number is 1 in FIG. 4B as an example. In the graph of FIG. 4B, a vertical axis denotes the number of the component $MV_x$ of the motion vector. The threshold values $Th_{x1}$ and $Th_{x2}$ in step S203 are decided such that areas of the region 1 and the region 2 are equal to each other in the histogram. At the time of generation of the histogram in step S202, since it is possible to know the total number of $MV_x$, when counting is performed from minimum $MV_x$, a value of $MV_x$ when 1/4 of the total number is reached is set as the first threshold value $Th_{x1}$ and the value of $MV_x$ when 3/4 of the total number is reached is set as the second threshold value $Th_{x2}$. The threshold values $Th_{y1}$ and $Thy_2$ in the case of the horizontal component $MV_y$ of the mode number 2 may also be decided in the same manner.

When the mode number 1 or the mode number 2 is selected, a threshold value is encoded and is transmitted to the video decoding apparatus similarly to the interpolation filter coefficients.

[Mode numbers are 3, 4, and 5]

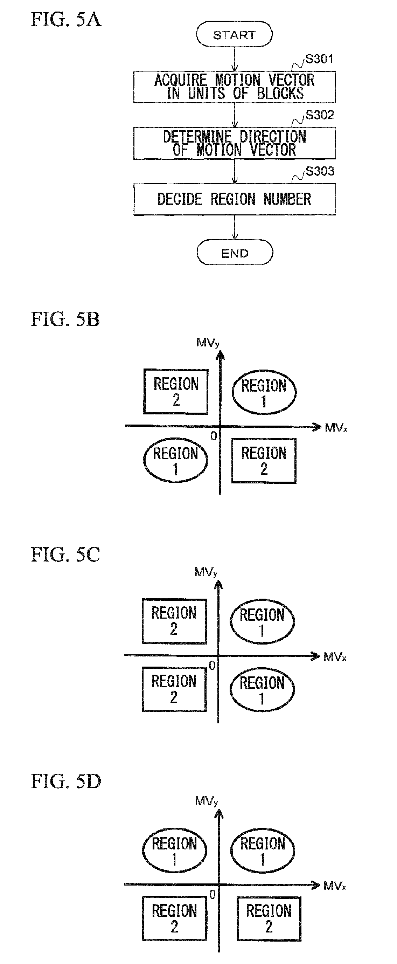

Mode numbers 3, 4, and 5 indicate a mode in which a region is divided while focusing on the direction of a motion vector. FIG. 5A illustrates a process flow of region division based on the direction (mode numbers are 3 to 5) of a motion vector. First, in step S301, a motion vector is acquired for a frame to be encoded in units of blocks. In step S302, the direction of a motion vector is determined. In step S303, a region number (region 1 or region 2) is decided based on the direction of the motion vector.

In the case of a division mode in which the mode number is 3, as illustrated in FIG. 5B, region division is performed such that a first region (region 1) is acquired when the motion vector is in the first quadrant or the third quadrant, and a second region (region 2) is acquired when the motion vector is in the second quadrant or the fourth quadrant.

In the case of a division mode in which the mode number is 4, as illustrated in FIG. 5C, region division is performed such that a first region (region 1) is acquired when an x component $MV_x$ of the motion vector is equal to or more than 0, and a second region (region 2) is acquired when the x component $MV_x$ of the motion vector is smaller than 0.

In the case of a division mode in which the mode number is 5, as illustrated in FIG. 5D, region division is performed such that a first region (region 1) is acquired when a y component $MV_y$ of the motion vector is equal to or more than 0, and a second region (region 2) is acquired when the y component $MV_y$ of the motion vector is smaller than 0.

[Mode numbers are 6 and 7]

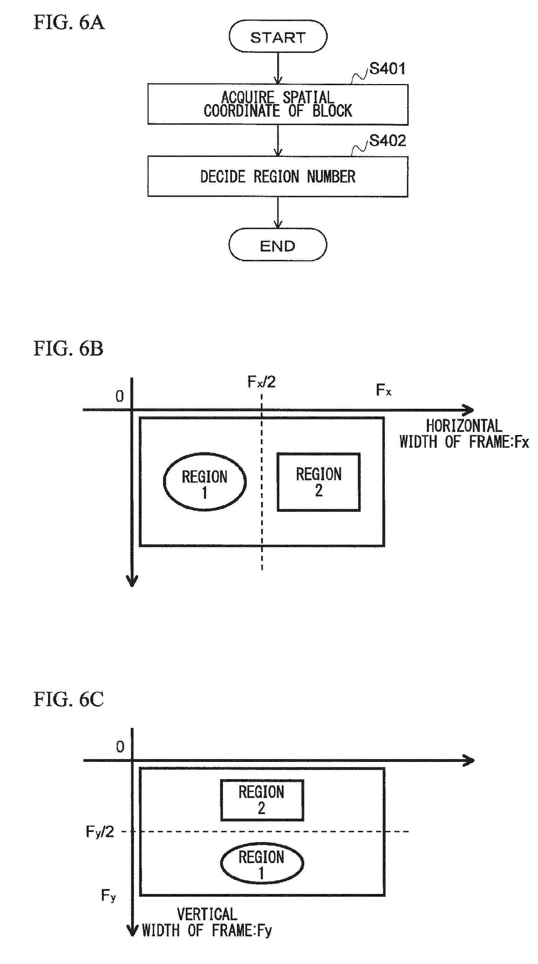

Mode numbers 6 and 7 indicate a mode in which a region is divided while focusing on a spatial coordinate. FIG. 6A illustrates a process flow of region division based on a spatial coordinate. First, in step S401, a spatial coordinate of a block to be encoded is acquired. In step S402, a region number (region 1 or region 2) is decided based on a value of the spatial coordinate of the block acquired in step S401.

A division mode in which the mode number is 6 is a mode in which a frame is divided into the two right and left regions, and is a mode in which a first region (region 1) is acquired when the spatial coordinate x of the block is equal to or less than $F_x/2$ that means half of a horizontal width of the frame, and a second region (region 2) is acquired when the spatial coordinate x of the block is larger than $F_x/2$ that means half of the horizontal width, as illustrated in FIG. 6B. Here, a threshold value is not limited to half of the horizontal width. For example, an arbitrary value may be used. When the threshold value is selected from several patterns of coordinates, the threshold value is encoded and is transmitted to the video decoding apparatus.

A division mode in which the mode number is 7 is a mode in which a frame is divided into the two upper and lower regions, and is a mode in which a first region (region 1) is acquired when the spatial coordinate y of the block is equal to or less than $F_y/2$ that means half of a vertical width of the frame, and a second region (region 2) is acquired when the spatial coordinate y of the block is larger than $F_y/2$ that means of the vertical width, as illustrated in FIG. 6C. Here, a threshold value is not limited to the half of the vertical width. For example, an arbitrary value may be used. When the threshold value is selected from several patterns of coordinates, the threshold value is encoded and is transmitted to the video decoding apparatus.

The above is an example of the region division mode when the number of regions is 2. However, modes in which the number of regions is not 2 may be mixed to the region division mode. The following is an example of the region division mode when the number of regions is 4.

[Example when the number of regions is 4]

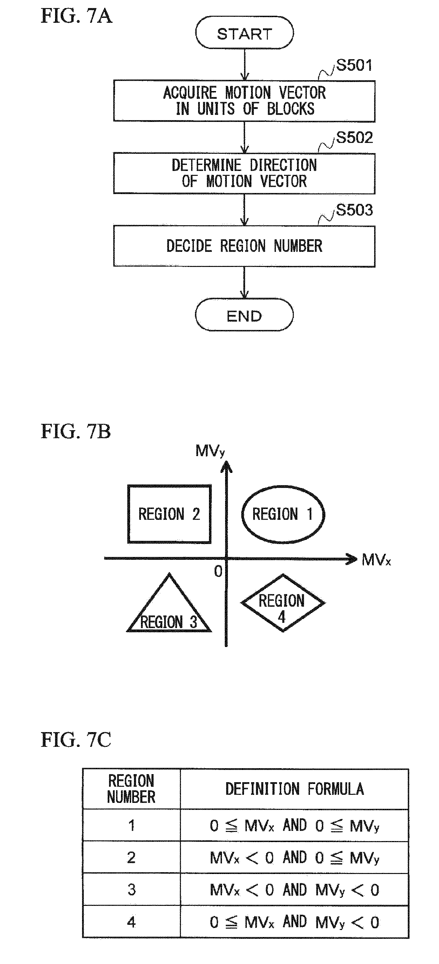

FIG. 7A illustrates a process flow of region division based on the direction of a motion vector when the number of regions is 4. First, in step S501, a motion vector is acquired for a frame to be encoded in units of blocks. In step S502, the direction of a motion vector is determined. In step S503, region numbers (regions 1 to 4) are decided based on the direction of the motion vector.

In this division mode, as illustrated in FIG. 7B and FIG. 7C, region division is performed such that a first region (region 1) is acquired when the motion vector is in the first quadrant, a second region (region 2) is acquired when the motion vector is in the second quadrant, a third region (region 3) is acquired when the motion vector is in the third quadrant, and a fourth region (region 4) is acquired when the motion vector is in the fourth quadrant.

[Video decoding apparatus]

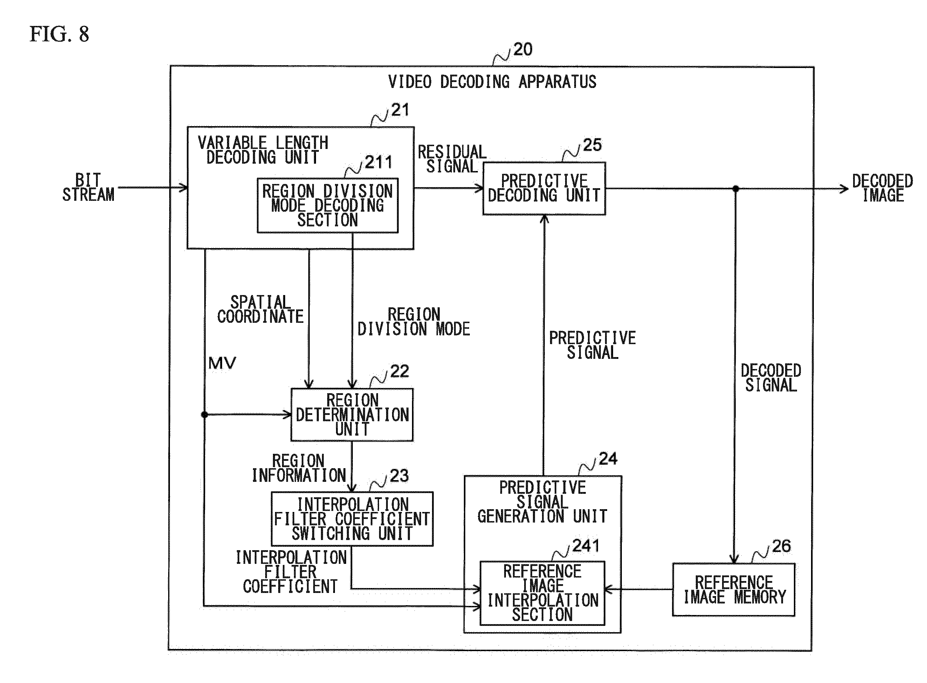

FIG. 8 is a diagram illustrating a configuration example of a video decoding apparatus in accordance with the present invention. A video decoding apparatus 20 receives the bit stream encoded by the video encoding apparatus 10 illustrated in FIG. 1, performs interpolation of decimal precision pixels by switching an adaptive interpolation filter for each region divided according to the region division mode, and generates a decoded image through decimal precision motion compensation. The video decoding apparatus 20 is different from the related video decoding apparatus 200 illustrated in FIG. 15, in that the video decoding apparatus 20 determines regions of blocks to be decoded according to the region division mode and performs the interpolation of the decimal precision pixels by switching the adaptive interpolation filter.

In the video decoding apparatus 20, a variable length decoding unit 21 receives the encoded bit stream, and decodes quantized transform coefficients, a motion vector, an interpolation filter coefficient group and the like. Particularly, a region division mode decoding section 211 decodes a mode number indicating the region division scheme encoded by the video encoding apparatus 10. Depending on the mode number, additional information (that is, a threshold value of a motion vector or a threshold value of a spatial coordinate), other than the mode number, is also decoded.

A region determination unit 22 determines regions that are set to units, in which interpolation filter coefficients are adaptively switched, for a frame to be decoded from the motion vector or the spatial coordinate of a block according to the region division mode indicated by the mode number decoded by the region division mode decoding section 211. An interpolation filter coefficient switching unit 23 switches the interpolation filter coefficients, which is decoded by the variable length decoding unit 21, for each region determined by the region determination unit 22.

A reference image interpolation section 241 in a predictive signal generation unit 24 applies an interpolation filter based on the interpolation filter coefficients, which are received from the interpolation filter coefficient switching unit 23, to a decoded reference image stored in a reference image memory 26, and restores decimal precision pixels of the reference image. The predictive signal generation unit 24 generates a predictive signal of blocks to be decoded from the reference image for which the restoration of the decimal precision pixels has been performed.

A predictive decoding unit 25 performs inverse quantization, inverse orthogonal transform and the like for the quantized coefficients decoded by the variable length decoding unit 21, generates a decoded signal by adding a predictive residual signal calculated by this process to the predictive signal generated by the predictive signal generation unit 24, and outputs the decoded signal as a decoded image. The decoded signal decoded by the predictive decoding unit 25 is stored in the reference image memory 26 for next predictive encoding.

[Process flow of video decoding apparatus]

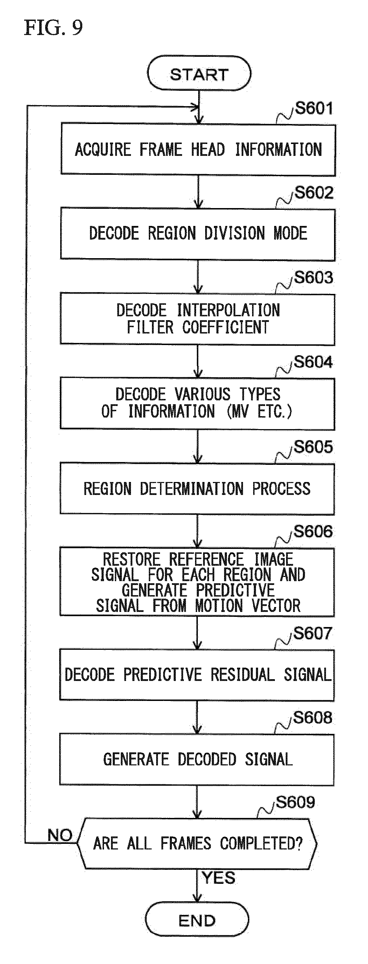

FIG. 9 is a flowchart of a video decoding process performed by the video decoding apparatus 20. Hereinafter, while a process of a luminance signal is described, it is applicable to a chrominance signal as well as the luminance signal unless specifically mentioned.

First, in step S601, the variable length decoding unit 21 acquires frame head information from an input bit stream. Next, in step S602, the variable length decoding unit 21 decodes a region division mode (a mode number) required for determination to switch interpolation filter coefficients in a frame. Additional information required in response to the mode number is also decoded in step S602. Next, in step S603, the variable length decoding unit 21 decodes various interpolation filter coefficients required for interpolation of decimal precision pixels of a reference image, and acquires an interpolation filter coefficient group for each region. In step S604, the variable length decoding unit 21 decodes various types of encoding information of a motion vector (MV) and the like.

Next, in step S605, the region determination unit 22 determines a region in units of blocks according to definition of the region division mode acquired in step S602, and acquires a region number.

Next, in step S606, the interpolation filter coefficient switching unit 23 selects a set of optimal interpolation filter coefficients from among the interpolation filter coefficient group acquired in step S603 from the region number acquired in step S605, and notifies the reference image interpolation section 241 of the optimal interpolation filter coefficients. The reference image interpolation section 241 restores decimal precision pixels of a reference image using an interpolation filter based on the notified interpolation filter coefficients. After restoring the decimal precision pixels, the predictive signal generation unit 24 generates a predictive signal of a block to be decoded using the motion vector decoded in step S604.

In step S607, the variable length decoding unit 21 decodes a predictive residual signal of the block to be decoded from the input bit stream.

Next, in step S608, the predictive decoding unit 25 generates a decoded signal by adding the predictive signal acquired in step S606 to the predictive residual signal acquired in step S607. The generated decoded signal is output as a decoded image and is stored in the reference image memory 26.

Steps S601 to S608 are repeated until decoding of all frames is completed, and when the decoding of all frames is completed, the procedure is completed (step S609).

The aforementioned video encoding and decoding processes may also be realized by a computer and a software program, and the program may also be recorded on a computer-readable recording medium through a network.

While the embodiments of the present invention have been described above with reference to the accompanying drawings, detailed configurations are not limited to the embodiments, and designs (addition, omission, replacement, and other modifications of the configuration) without departing from the scope and spirit of the present invention are also included. The present invention is not limited by the above description, and is limited only by the appended claims.

INDUSTRIAL APPLICABILITY

The present invention can be applied to video encoding and decoding methods, and video encoding and decoding apparatuses having a function of changing a set of interpolation filter coefficients within a frame, and can select an optimal region division scheme in units of frames or slices, and can switch interpolation filter coefficients in consideration of spatiotemporal locality of an image. Consequently, it is possible to improve the coding efficiency through reduction of prediction error energy.

[Description of Reference Numerals]

| | |
|---|---|
| 10: | Video encoding apparatus |
| 11: | Region division unit |
| 12: | Interpolation filter coefficient switching unit |
| 13: | Predictive signal generation unit |
| 131: | Reference image interpolation section |
| 132: | Motion detection section |
| 14: | Predictive encoding unit |
| 15: | Region division mode determination unit |
| 16: | Variable length encoding unit |
| 17: | Decoding unit |
| 18: | Reference image memory |
| 20: | Video decoding apparatus |
| 21: | Variable length decoding unit |
| 211: | Region division mode decoding section |
| 22: | Region determination unit |
| 23: | Interpolation filter coefficient switching unit |
| 24: | Predictive signal generation unit |
| 241: | Reference image interpolation section |
| 25: | Predictive decoding unit |
| 26: | Reference image memory |

**Claims**

**1.** A video encoding method using decimal precision motion compensation, comprising the steps of:

sequentially selecting one region division scheme from among a plurality of region division schemes decided in advance;

performing region division in a frame or a slice based on information acquired after decoding or during the decoding from a frame or a slice, which is to be encoded, according to the selected region division scheme, and selecting an interpolation filter of a decimal precision pixel for each divided region;

performing interpolation of a decimal precision pixel for a reference image using the selected interpolation filter, and performing predictive encoding using decimal precision motion compensation;

calculating and storing an encoding cost for the selected region division scheme;

selecting a region division scheme, in which a cost is minimized, among the plurality of region division schemes based on the stored cost, and encoding information indicating the selected region division scheme; and

encoding the frame or the slice, which is to be encoded, using the selected region division scheme.

2. The video encoding method according to claim 1, wherein the information acquired after the decoding or during the decoding includes a size of a component of a motion vector of a block to be encoded, a direction of the motion vector of the block to be encoded, or a spatial coordinate indicating a position of the block to be encoded.

3. The video encoding method according to claim 1 or 2, wherein the plurality of region division schemes include a plurality of modes among a mode in which a region is not divided, one or a plurality of modes in which a region is divided by magnitude of a horizontal component of the motion vector of the block to be encoded, one or a plurality of modes in which the region is divided by a direction of the motion vector of the block to be encoded, and one or a plurality of modes in which the region is divided by a spatial coordinate indicating a position of the block to be encoded.

4. The video encoding method according to claim 3, further comprising a step of:

encoding threshold value information necessary for performing the region division in response to a selected mode selected from among the one or plurality of modes.

5. A video decoding method using decimal precision motion compensation, comprising the steps of:

decoding information indicating a region division scheme used at a time of encoding;
decoding an interpolation filter coefficient of a decimal precision pixel;
performing classification of a region according to a region division scheme, which is acquired in the decoding, using information acquired from a block to be decoded in units of blocks, and dividing a region of a frame or a slice, which is to be decoded, according to a result of the classification; and
switching the interpolation filter of a decimal precision pixel for each divided region, performing interpolation of a decimal precision pixel for a reference image, and performing predictive decoding using decimal precision motion compensation.

6. The video decoding method according to claim 5, wherein the region division scheme includes a plurality of modes selected from among a mode in which a region is not divided, one or a plurality of modes in which the region is divided by magnitude of a horizontal component of the motion vector of the block to be encoded, one or a plurality of modes in which the region is divided by a direction of the motion vector of the block to be encoded, and one or a plurality of modes in which the region is divided by a spatial coordinate indicating a position of the block to be encoded.

7. The video decoding method according to claim 6, further comprising a step of:

decoding threshold value information necessary for performing the region division in response to a selected mode selected from among the one or plurality of modes.

8. A video encoding apparatus using decimal precision motion compensation, comprising:

a region division unit that sequentially selects one region division scheme from among a plurality of region division schemes decided in advance;
an interpolation filter coefficient switching unit that performs region division in a frame or a slice based on information acquired after decoding or during the decoding from a frame or a slice, which is to be encoded, according to the selected region division scheme, and selects an interpolation filter of a decimal precision pixel for each divided region;

a predictive encoding unit that performs interpolation of a decimal precision pixel for a reference image using the selected interpolation filter, and performs predictive encoding using decimal precision motion compensation;

a region division mode determination unit that calculates and stores an encoding cost for the selected region division scheme, selects a region division scheme, in which a cost is minimized, among the plurality of region division schemes based on the stored cost, and encodes information indicating the selected region division scheme; and

an encoding unit that encodes the frame or the slice, which is to be encoded, using the region division scheme in which the cost is minimized.

9.  A video decoding apparatus using decimal precision motion compensation, comprising:

a region division mode decoding section that decodes information indicating a region division scheme used at a time of encoding;

a variable length decoding unit that decodes an interpolation filter coefficient of a decimal precision pixel;

a region determination unit that performs classification of a region according to a region division scheme, which is acquired in the decoding, using information acquired from a block to be decoded in units of blocks, and divides a region of a frame or a slice, which is to be decoded, according to a result of the classification; and

a predictive encoding unit that switches the interpolation filter of a decimal precision pixel for each divided region, performs interpolation of a decimal precision pixel for a reference image, and performs predictive decoding using decimal precision motion compensation.

10. A video encoding program for causing a computer to perform the video encoding method according to one of claims 1 to 4.

11. A video decoding program for causing a computer to perform the video encoding method according to one of claims 5 to 7.

FIG. 1

**VIDEO ENCODING APPARATUS** — 10

- REGION DIVISION MODE — 15 REGION DIVISION MODE DETERMINATION UNIT
- RD COST
- COEFFICIENT VALUE AFTER QUANTIZATION
- REGION DIVISION MODE
- INPUT IMAGE → REGION DIVISION UNIT — 11
- ORIGINAL SIGNAL
- PREDICTIVE ENCODING UNIT — 14
- VARIABLE LENGTH ENCODING UNIT — 16 → OUTPUT BIT STREAM
- INTERPOLATION FILTER COEFFICIENT SWITCHING UNIT — 12
- MV
- DECODING UNIT — 17
- PREDICTIVE SIGNAL
- DECODED SIGNAL
- INTERPOLATION FILTER COEFFICIENT
- MOTION DETECTION SECTION — 132
- MV
- INTERPOLATION SIGNAL
- REFERENCE IMAGE INTERPOLATION SECTION — 131
- REFERENCE IMAGE MEMORY — 18
- PREDICTIVE SIGNAL GENERATION UNIT — 13

EP 2 592 835 A1

FIG. 2

START

INPUT FRAME — S101

CALCULATE MOTION VECTOR
IN UNITS OF BLOCKS — S102

DESIGNATE REGION DIVISION MODE — S103

REGION DIVISION PROCESS
ACCORDING TO MODE — S104

DERIVE INTERPOLATION FILTER
COEFFICIENT IN HORIZONTAL
DIRECTION FOR EACH REGION — S105

HORIZONTAL INTERPOLATION
PROCESS FOR EACH REGION — S106

DERIVE INTERPOLATION FILTER
COEFFICIENT IN VERTICAL
DIRECTION FOR EACH REGION — S107

VERTICAL INTERPOLATION
PROCESS FOR EACH REGION — S108

CALCULATE MOTION VECTOR
FOR NEW INTERPOLATED IMAGE — S109

CALCULATE AND STORE
RATE DISTORTION COST — S110

DETERMINE OPTIMAL
REGION DIVISION MODE — S111

ENCODE OPTIMAL
REGION DIVISION MODE — S112

ENCODE OPTIMAL INTERPOLATION
FILTER COEFFICIENT — S113

ENCODE OTHER INFORMATION
(TEXTURE INFORMATION,
MOTION VECTOR ETC.) — S114

ARE ALL FRAMES COMPLETED? — S115

NO

YES

END

FIG. 3

| REGION DIVISION MODE NUMBER | REGION 1 | REGION 2 |
|---|---|---|
| 0 | NO DIVISION (RELATED AIF) | |
| 1(FOCUS ON x COMPONENT OF MV) | $Th_{x1} \leqq MV_x \leqq Th_{x2}$ | otherwise |
| 2(FOCUS ON y COMPONENT OF MV) | $Th_{y1} \leqq MV_y \leqq Th_{y2}$ | otherwise |
| 3(FOCUS ON DIRECTION OF MV) | MV:FIRST QUADRANT/THIRD QUADRANT | otherwise |
| 4(FOCUS ON DIRECTION OF MV) | $0 \leqq MV_x$ | otherwise |
| 5(FOCUS ON DIRECTION OF MV) | $0 \leqq MV_y$ | otherwise |
| 6(HORIZONTAL DIVISION OF SCREEN) | $x \leqq F_x/2$ | $F_x/2 < x$ |
| 7(VERTICAL DIVISION OF SCREEN) | $y \leqq F_y/2$ | $F_y/2 < y$ |

FIG. 4A

FIG. 4B

FIG. 5A

FIG. 5B

FIG. 5C

FIG. 5D

FIG. 6A

```
        START
          │
          ▼                    ┌S401
┌─────────────────────────┐
│   ACQUIRE SPATIAL       │
│   COORDINATE OF BLOCK   │
└─────────────────────────┘
          │
          ▼                    ┌S402
┌─────────────────────────┐
│   DECIDE REGION NUMBER  │
└─────────────────────────┘
          │
          ▼
         END
```

FIG. 6B

FIG. 6C

FIG. 7A

```
                    ┌─────────┐
                    │  START  │
                    └─────────┘
                         │
                         ▼              ╱S501
        ┌──────────────────────────────┐
        │   ACQUIRE MOTION VECTOR       │
        │     IN UNITS OF BLOCKS        │
        └──────────────────────────────┘
                         │
                         ▼              ╱S502
        ┌──────────────────────────────┐
        │    DETERMINE DIRECTION        │
        │     OF MOTION VECTOR          │
        └──────────────────────────────┘
                         │
                         ▼              ╱S503
        ┌──────────────────────────────┐
        │     DECIDE REGION NUMBER      │
        └──────────────────────────────┘
                         │
                         ▼
                    ┌─────────┐
                    │   END   │
                    └─────────┘
```

FIG. 7B

FIG. 7C

| REGION NUMBER | DEFINITION FORMULA |
|---|---|
| 1 | $0 \leqq MV_x$ AND $0 \leqq MV_y$ |
| 2 | $MV_x < 0$ AND $0 \leqq MV_y$ |
| 3 | $MV_x < 0$ AND $MV_y < 0$ |
| 4 | $0 \leqq MV_x$ AND $MV_y < 0$ |

FIG. 8

FIG. 9

```
                    ┌──────────┐
                    │  START   │
                    └──────────┘
                         │
                         ▼                    ⌇S601
         ┌────────────────────────────────────┐
         │   ACQUIRE FRAME HEAD INFORMATION    │
         └────────────────────────────────────┘
                         │
                         ▼                    ⌇S602
         ┌────────────────────────────────────┐
         │     DECODE REGION DIVISION MODE     │
         └────────────────────────────────────┘
                         │
                         ▼                    ⌇S603
         ┌────────────────────────────────────┐
         │        DECODE INTERPOLATION         │
         │        FILTER COEFFICIENT           │
         └────────────────────────────────────┘
                         │
                         ▼                    ⌇S604
         ┌────────────────────────────────────┐
         │        DECODE VARIOUS TYPES         │
         │     OF INFORMATION (MV ETC.)        │
         └────────────────────────────────────┘
                         │
                         ▼                    ⌇S605
         ┌────────────────────────────────────┐
         │    REGION DETERMINATION PROCESS     │
         └────────────────────────────────────┘
                         │
                         ▼                    ⌇S606
         ┌────────────────────────────────────┐
         │      RESTORE REFERENCE IMAGE        │
         │   SIGNAL FOR EACH REGION AND        │
         │       GENERATE PREDICTIVE           │
         │   SIGNAL FROM MOTION VECTOR         │
         └────────────────────────────────────┘
                         │
                         ▼                    ⌇S607
         ┌────────────────────────────────────┐
         │  DECODE PREDICTIVE RESIDUAL SIGNAL  │
         └────────────────────────────────────┘
                         │
                         ▼                    ⌇S608
         ┌────────────────────────────────────┐
         │      GENERATE DECODED SIGNAL        │
         └────────────────────────────────────┘
                         │
                         ▼                    ⌇S609
    NO  ╱─────────────────────────────────────╲
  ◀─────    ARE ALL FRAMES COMPLETED?          │
        ╲─────────────────────────────────────╱
                         │ YES
                         ▼
                    ┌──────────┐
                    │   END    │
                    └──────────┘
```

FIG. 10

FIG. 11

FIG. 12A

A1 A2 A3 A4 A5 A6

B1 B2 B3 B4 B5 B6

C1 C2 C3 a b c C4 C5 C6
d e f g
h i j k
D1 D2 l m n o D5 D6
D3 D4

E1 E2 E3 E4 E5 E6

F1 F2 F3 F4 F5 F6

⦾ INTEGER PRECISION PIXEL       ◯ INTERPOLATED PIXEL

FIG. 12B

Step 1 : horizontal

C3 a b c C4

D3 a' b' c' D4

FIG. 12C

Step 2 : vertical

C3 a b c C4
d e f g
h i j k
l m n o
D3 a' b' c' D4

FIG. 13A

1 filter set / frame

FIG. 13B

2(or more) filter sets / frame

FIG. 14

VIDEO ENCODING APPARATUS ~100

INPUT IMAGE →

REGION DIVISION UNIT ~101

ORIGINAL SIGNAL

COEFFICIENT VALUE AFTER QUANTIZATION

PREDICTIVE ENCODING UNIT ~104

VARIABLE LENGTH ENCODING UNIT ~105

→ OUTPUT BIT STREAM

REGION INFORMATION

MV

DECODING UNIT ~106

INTERPOLATION FILTER COEFFICIENT SWITCHING UNIT ~102

FILTER COEFFICIENT OPTIMIZATION SECTION ~1021

PREDICTIVE SIGNAL

DECODED SIGNAL

MOTION DETECTION SECTION ~1032

MV

INTERPOLATION SIGNAL

REFERENCE IMAGE INTERPOLATION SECTION 1031~

REFERENCE IMAGE MEMORY ~107

INTERPOLATION FILTER COEFFICIENT

PREDICTIVE SIGNAL GENERATION UNIT

103~

EP 2 592 835 A1

27

FIG. 15

VIDEO DECODING APPARATUS 200

BIT STREAM → VARIABLE LENGTH DECODING UNIT (201)

RESIDUAL SIGNAL → PREDICTIVE DECODING UNIT (205) → DECODED IMAGE

DECODED SIGNAL → REFERENCE IMAGE MEMORY (206)

SPATIAL COORDINATE, MV → REGION DETERMINATION UNIT (202)

REGION INFORMATION → INTERPOLATION FILTER COEFFICIENT SWITCHING UNIT (203)

INTERPOLATION FILTER COEFFICIENT

PREDICTIVE SIGNAL GENERATION UNIT (204)

REFERENCE IMAGE INTERPOLATION SECTION (2041)

PREDICTIVE SIGNAL

28

| | | |
|---|---|---|
| **INTERNATIONAL SEARCH REPORT** | | International application No.<br>PCT/JP2011/067963 |

| | |
|---|---|
| **A. CLASSIFICATION OF SUBJECT MATTER**<br>*H04N7/32(2006.01)i* | |

According to International Patent Classification (IPC) or to both national classification and IPC

**B. FIELDS SEARCHED**

Minimum documentation searched (classification system followed by classification symbols)
H04N7/32

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Shohei Matsuo; Yukihiro Bandoh; Seishi Takamura; Hirohisa Jozawa, Region-based adaptive interpolation filter, JCTVC-B051 (Joint Collaborative Team on Video Coding (JCT-VC) of ITU-T SG16 WP3 and ISO/IEC JTC1/ SC29/WG11), JCTVC-B051, 2010.07.16 | 1-11 |
| X<br>A | Ronggang Wang; Yongbing Zhang; Yuan Dong; Haila Wang, Partition-level adaptive interpolation filter for video coding, Multimedia and Expo, 2009. IEEE International Conference on, 2009.07.03, Page 157 – 160 | 1,8,10<br>2-7,9,11 |

| | | |
|---|---|---|
| ☒ Further documents are listed in the continuation of Box C. | ☐ See patent family annex. | |

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| | |
|---|---|
| Date of the actual completion of the international search<br>20 September, 2011 (20.09.11) | Date of mailing of the international search report<br>27 September, 2011 (27.09.11) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/067963

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2010/021108 A1  (Panasonic Corp.), 25 February 2010 (25.02.2010), entire text; all drawings & US 2010/0226432 A1     & EP 2157799 A1 & EP 2317770 A1          & MX 2010004122 A & CN 101828400 A          & KR 10-2011-0042025 A | 1-11 |
| A | WO 2008/069073 A1  (NTT Docomo Inc.), 12 June 2008 (12.06.2008), entire text; all drawings & US 2009/0274216 A1     & EP 2104358 A1 & CA 2671180 A            & CN 101543081 A & KR 10-2009-0094343 A   & RU 2009124928 A | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010180814 A

**Non-patent literature cited in the description**

- **HIROSHI HARASHIMA ; YOSHINORI SAKAI ; TOSHIYUKI YOSHIDA.** Video Information Encoding. Ohmsha, Ltd, 2001, 135-136
- **SAKAE OKUBO ; SHINYA KADONO ; YOSHIHIRO KIKUCHI ; TERUHIKO SUZUKI.** H.264/AVC Textbook. Impress R&D, 2009, 119-123
- **I. E. G. RICHARDSON ; G. J. SULLIVAN.** H.264 and MPEG-4 VIDEO COMPRESSION. WILEY, 2003, 172-175
- **Y. VATIS ; B. EDLER ; D. T. NGUYEN ; J. OSTERMANN.** Motion and aliasing-compensated prediction using a two-dimensional non-separable adaptive Wiener interpolation filter. *Proc. ICIP2005, IEEE International Conference on Image Processing,* September 2005, II 894-897
- **S. WITTMANN ; T. WEDI.** Separable adaptive interpolation filter for video coding. *Proc. ICIP2008, IEEE International Conference on Image Processing,* October 2008, 2500-2503
- **SHOHEI MATSUO ; SEISHI TAKAMURA ; HIROHISA JOZAWA.** Separable Adaptive Interpolation Filter with Region Dividing Technique for Motion Compensation. *Institute of Electronic, Information and Communication Engineering, Image Engineering,* November 2009, 113-116